# EUROPEAN PATENT SPECIFICATION

(11) **EP 3 339 456 B1**
(45) Date of publication and mention of the grant of the patent: **26.02.2020**
(21) Application number: 17203189.0
(22) Date of filing: 23.11.2017
(51) Int. Cl.: C22C 9/06, A23G 9/22

(54) **FOOD HANDLING APPARATUS WITH PARTS MADE OF A CU-NI BASED ALLOY**
NAHRUNGSHANDHABUNGSVORRICHTUNG MIT TEILEN AUS EINER CU-NI-BASIERTEN LEGIERUNG
APPAREIL DE MANIPULATION D'ALIMENTS AYANT DES PARTIES CONSTITUÉES D'UN ALLIAGE À BASE DE CU-NI

(30) Priority: 22.12.2016 EP 16206065
(43) Date of publication of application: 27.06.2018
(73) Proprietor: Tetra Laval Holdings & Finance S.A., 1009 Pully (CH)
(72) Inventor: Bendixen, Ole, DK-8464 GALTEN (DK)
(74) Representative: Tetra Pak - Patent Attorneys SE

(56) References cited:
- US-A- 5 242 657
- US-A- 5 846 483
- US-A- 6 059 901
- US-A1- 2011 038 752

## Description

### Technical Field

The present application relates to food handling apparatuses, a kit of parts for upgrading a food handling apparatus, a method for freezing ice cream mix or water ice, and a method for mixing particles into ice cream mix or water ice mix.

### Background Art

Today a number of food handling apparatuses are used in the food processing industry, such as pumps that are used for feeding the food in a food processing line. It is commonly known to coat surfaces of such pumps with a copper-nickel alloy. In particular surfaces that are in direct contact with other surfaces in the pump, such as gears in a gear pump, are provided with the alloy for the purpose of reducing friction. A problem with using copper-nickel alloys in food processing applications is that the alloys typically comprise lead. Lead reduces friction between parts of the pump. However, even if lead does not propagate into food that is pumped, it is desired to avoid any use of lead since lead per se is known to be harmful to humans.

Replacing lead has however proven to be difficult if friction should still be kept low, and alternative alloys that have been presented have had different types of drawbacks. In some cases, lead has been replaced by another chemical element that may be less harmful to humans than lead, but on the other hand to a higher degree is released into the food product during operation. Other alternatives that have been presented may be less harmful, but on the other hand do not provide an adequate lubricating function, which do not make them an alternative from a machine performance perspective.

Two examples of lead free alloys are presented in US 5,242,657 and US 5,846,483. In US 5,242,657 it is presented an alloy that comprises nickel, zink, tin, bismuth, iron, mangan and copper. Even though the negative effects of lead are in many aspects avoided the alloy is not optimal in respect of providing the friction and corrosion properties needed for achieving long running time and low maintenance costs. In US 5,846,483 an improved alloy was presented. The alloy presented in US 5,846,483 comprises nickel, zink, tin, selenium, bismuth, iron, phosphor and copper.

Even though these prior art alloys provide lead free alloys, they are still not optimal in respect of their capability to provide a desirable combination of friction properties, corrosion resistance and strength, in particular when the food that is in contact with the alloy comprises hard particles, such as ice crystals.

### Summary

It is an object of the invention to at least partly overcome one or more of the above-identified limitations of the prior art. In particular, it is an object to provide an alloy that has a combination of good friction properties, corrosion properties, strength and food safety properties.

To solve this object it is according to a first aspect provided a food handling apparatus as defined by claim 1.

It has been shown that this alloy is very durable and that it provides good friction properties, in particular when it comes to handling food with hard particles. Also, the alloy has no lead, or has at least a neglectable amount of lead.

Even more specifically, the alloy may comprise 14,0 - 16,5 wt% nickel, 3,0 - 5,0 wt% zink, 4,0 - 4,8 wt% tin, 1,4 - 1,9 wt% bismuth, and 0,60 - 0,90 wt% selenium.

Still even more specifically, the alloy may comprise 14,8 wt% nickel, 3,6 wt% zink, 4,4 wt% tin, 1,52 wt% bismuth, and 0,66 wt% selenium.

A ratio between bismuth and selenium may be any of: at least 2,0, in the range of 2,1 - 2,5, and 2,3.

The alloy may have a hardness of at least 125 HB. Further, the alloy may have a tensile strength of at least 290 MPa.

The alloy may be heat treated at a temperature in the range of 400 - 500 °C, for a period of at least 2 hours.

The food handling apparatus may be a pump, and the first member may be configured to rotate inside the pump such that fluid food product is transferred through the pump.

The first member may be an impeller, and the second member may be a cover that is made of an alloy that comprises nickel, zink, tin, 1,2 - 2,1 wt% bismuth, 0,30 - 0,95 wt% selenium, and copper that balances the alloy.

Alternatively, the first member may be a rotor cylinder and the second member may be a blade that is made of an alloy that comprises nickel, zink, tin, 1,2 - 2,1 wt% bismuth, 0,30 - 0,95 wt% selenium, and copper that balances the alloy.

According to a second aspect it is provided a unit for freezing fluid food product, such as ice cream mix or water ice mix, the unit comprising a freezer for freezing the fluid food product, a pump arranged to transfer the fluid food product through the freezer, wherein the pump is a food handling apparatus according to the first aspect.

According to a third aspect it is provided a unit for mixing food particles into ice cream mix or water ice mix, the unit comprises a mixer that has an inlet for food particles, an inlet for ice cream mix or water ice mix, and an outlet for ice cream mix or water ice mix into which food particles are mixed, wherein the mixer is a food handling apparatus according to the first aspect.

According to a fourth aspect it is provided a kit of parts for upgrading a food handling apparatus as defined by claim 13.

According to a fifth aspect it is provided a method for freezing ice cream mix, the method comprising transferring ice cream mix by a food handling apparatus according to the first aspect, through a freezer, and freezing the ice cream mix, inside the freezer.

According to a sixth aspect it is provided a method for mixing food particles into ice cream mix or water ice mix, the method comprising transferring food particles, and ice cream mix or water ice mix, through a food handling apparatus according to the first aspect.

The pump, the freezer unit, the mixing unit and the kit of parts are thus different embodiments of, or parts of, a food handling apparatus that uses the alloy, and may thus incorporate any embodiments of the alloy. It has been shown that these embodiments of food handling apparatus are very good when it comes to handling frozen or partially frozen food products, such as ice cream (ice cream mix) or water based ice mix.

### Brief Description of the Drawings

Embodiments will now be described, by way of example, with reference to the accompanying schematic drawings, in which
Fig 1 is a cross sectional front view of a food handling apparatus in form of a pump,
Fig. 2 illustrates an example of a unit for freezing fluid food product,
Fig. 3 is a perspective view of a food handling apparatus in form of a unit for mixing food particles,
Fig. 4 is a flowchart illustrating a method for freezing ice cream mix, and
Fig. 5 is a flowchart illustrating a method for transferring food particles and ice cream mix or water ice mix.

### Detailed description

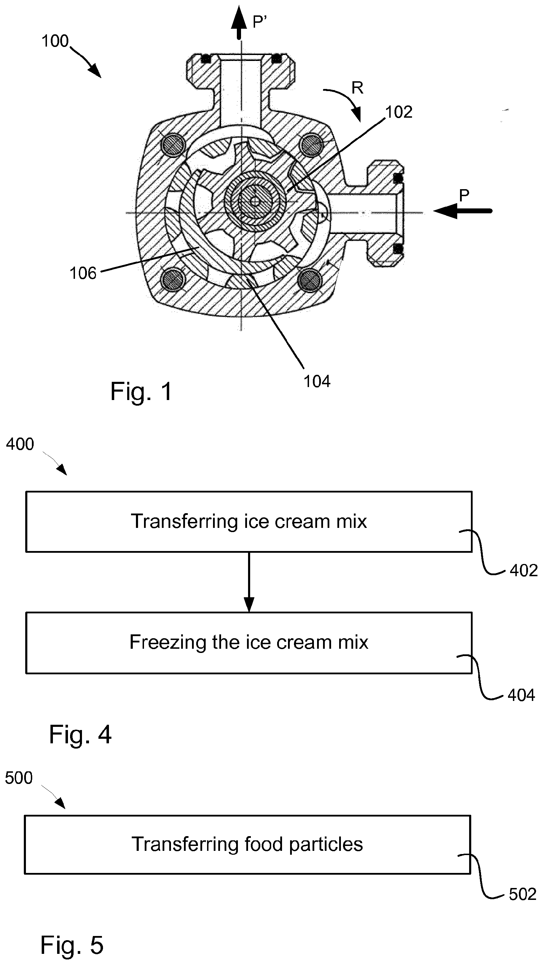

With reference to Fig. 1 a food handling apparatus in form of a gear pump 100 is illustrated. Incoming product P to the pump 100, which may be a fluid food product, may be transported from an inlet around a center axis by a star wheel 102 and an impeller 104, arranged to rotate in rotation direction R, to an outlet and there be fed out as outgoing product P'. A cover 106 is arranged to form a fixedly arranged separating wall between part of the star wheel 102 and the impeller 104. An axis of rotation of the star wheel 102 is offset from the center axis of the pump100, and a suction effect is achieved when the impeller 104 rotates, such that the product P may be transferred from the inlet to the outlet.

In order to achieve the suction effect, there may be contact between the star wheel 102, the impeller 104 and the cover 106. In order to provide for a smooth operation of the pump 100, surfaces of the star wheel 102, the impeller 104 and the cover 106 may be provided with an alloy with low friction properties. That the parts are provided with the alloy may mean that they are covered by a layer of the alloy, or that they are fully made of the alloy. Further, in order to provide for a long running time between service intervals the alloy may be wear resistant. Further, in order to provide for that food products transported by the internal gear pump is safe to consume the alloy can be made such that a risk that toxic substances or other substances that cause health issues if being consumed do not migrate from the alloy to the food products.

With this in mind, it has been found that an alloy having the claimed composition that comprises nickel, zinc, tin, 1.2-2.1 wt% bismuth, 0.30-0.95 wt% selenium, and copper fulfil these needs. Further, the ratio bismuth to selenium may be greater than 2.0:1. Empirical tests have shown that this alloy provides a durable pump with low friction between movable, lead-free parts. In alternative embodiments the alloy comprises metals as described in the summary.

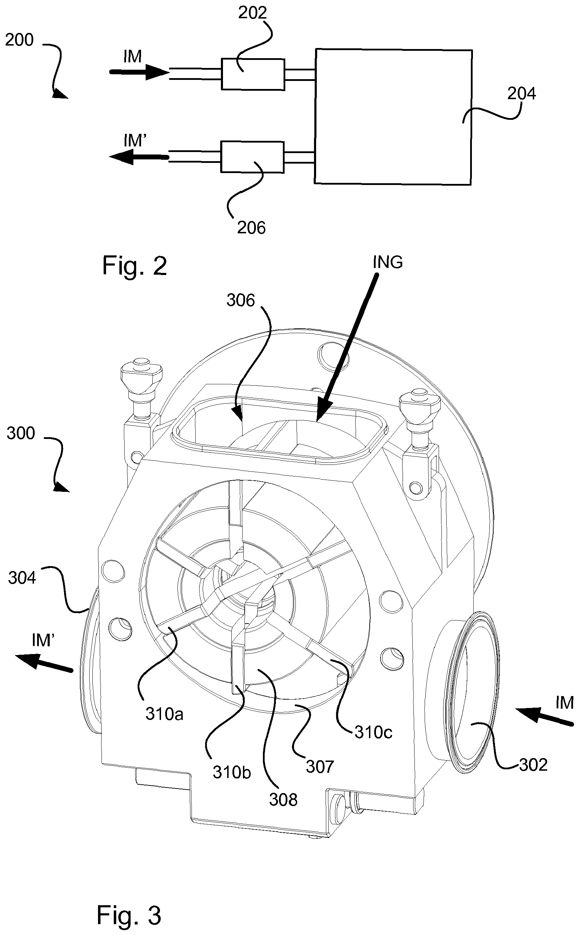

The internal gear pump 100 may be used in a wide range of applications. An example of such an application is a continuous freezer 200 as schematically illustrated in Fig. 2. In order to provide for a good control of a flow of ice cream mix, a first pump 202 may be used for feeding incoming ice cream mix IM into a freezer 204, which may be arranged to whip air into the ice cream mix and to freeze the ice cream mix, and a second pump 206 may be used for feeding out outgoing ice cream mix IM' from the freezer 204. The pumps 202, 206 may be of the same type as the pump 100 of Fig 1.

Another example of a food handling apparatus that benefits from the alloy is a rotary vane pump 300, also known as a lamella pump, as illustrated in Fig. 3. The rotary vane pump 300 may be used as a mixing pump or mixer, which may form part of an ingredient dosing device in ice cream production lines. An incoming ice cream mix IM, or a water ice mix, may be fed into the rotary vane pump 300 via an inlet 302 and outgoing ice cream mix IM' may be fed out via an outlet 304. Ingredients ING, such as chocolate pieces, may be fed into the rotary vane pump 300 via an ingredient inlet 306. Inside a pump housing 307 of the rotary vane pump 300, a rotor, or rotor cylinder, 308 may be arranged, and a number of vanes, or blades, 310a, 310b, 310c may be held by the rotor cylinder 308. By having a rotation center of the rotor cylinder 308 offset relatively a center of the pump housing 307 and by having the vanes 310a, 310b, 310c arranged such that they may slide between different positions in the rotor cylinder 308, a suction effect may be achieved such that ice cream mix may be transported from the inlet 302 to the outlet 304.

In order to achieve the suction effect, there is typically direct contact between surfaces of the vanes 310a, 310b, 310c and the rotor cylinder 308 as well as between the vanes 310a, 310b, 310c and the pump housing 307. In order to provide for a smooth operation of the rotary vane pump 300 the surfaces may be coated with the alloy presented above. Any of the rotor cylinder 308, the vanes 310a, 310b, 310c and the pump housing 307 may be fully made of the alloys (i.e. alloy all through the parts).

With reference to Fig. 4 it is illustrated a flow chart 400 related to a method for freezing ice cream mix. The method may be implemented by the continuous freezer 200 shown in Fig. 2. In a first step 402 the ice cream mix may be transferred through a food handling apparatus, such as the pump 202, through the freezer 204, and in a second step 404 the ice cream mix may be frozen inside the freezer. The two steps 402 and 404 are typically performed continuously and simultaneously.

Fig. 5 illustrates a flowchart 500 related to a method for transferring food particles and ice cream mix or water ice mix. The method may comprise a step 502 of transferring food particles, and ice cream mix or water ice mix, through a food handling apparatus, such as the rotary vane pump 300 illustrated in Fig. 3.

Although examples above are given in the field of ice cream production, the general principles apply to fluid food products in general.

As mentioned, all parts that are made of the alloy may be solid alloy parts, i.e. the parts are made of the alloy all-through. An example of the alloy was manufactured by combining and melting the following amounts of metals: 14,8 wt% nickel, 3,6 wt% zink, 4,4 wt% tin, 1,52 wt% bismuth and 0,66 wt% selenium. Copper then balanced the alloy, i.e. constituted the remaining metal so that the total wt% reach 100 w%. Here, wt% refers to weight percentage. The metals had prior the mixing conventional forms as commercially available in the metallurgic industry and as suitable for constituting parts of an alloy. The melted metals formed a melted alloy that was casted into alloy pieces. The melting, casting and subsequent cooling was performed according to known techniques and principles, using standard equipment.

The alloy pieces were next heat treated at a temperature in the range of 400 - 500 °C for a period of at least 3 hours, using conventional heat treatment equipment. Measurements then showed that the alloy has a hardness of at least 125 HB and a tensile strength of at least 290 MPa.

Specifically, for the exemplified alloy, when performing tests on a bar made of the alloy, that had a diameter of 105 mm and was heat treated at 450°C for 4 hours and thereafter air cooled, the tensile strength was 307 Mpa, A5 elongation was 2,5 % and hardness was 143 HB. For other heat treatment temperatures other values were obtained, as shown in the table below.

| **Heat treatment time and temperature** | **Tensile Strength Mpa** | **Elongation A5 %** | **Hardness HB** |
|---|---|---|---|
| No heat treatment | 203 | 5,5 | 97 |
| 400°C for 4 hours | 288 | 2,5 | 135 |
| 450°C for 4 hours | 307 | 2,5 | 143 |
| 500°C for 4 hours | 285 | 5,5 | 128 |
| 550°C for 4 hours | 243 | 1 | 109 |

Cast alloy pieces are readily machine worked by using conventional equipment, to form the parts that are described above as comprising the alloy.

From the description above follows that, although various embodiments of the invention have been described and shown, the invention is not restricted thereto, but may also be embodied in other ways within the scope of the subject-matter defined in the following claims.

## Claims

1. A food handling apparatus comprising a first member (102, 104, 106, 307, 308, 310a, 310b, 310c) and a second (102,104, 106, 307, 308, 310a, 310b, 310c) member, the first member being arranged to move relative the second member, wherein the first member comprises an alloy that is in contact with the second member, the alloy comprising
13,0 - 17,5 wt% nickel,
2,5 - 6,0 wt% zinc,
3,0 - 6,0 wt% tin,
1,2 - 2,1 wt% bismuth,
0,30 - 0,95 wt% selenium, and
copper that balances the alloy.

2. A food handling apparatus according to claim 1, wherein the alloy comprises
14,0 - 16,5 wt% nickel,
3,0 - 5,0 wt% zink,
4,0 - 4,8 wt% tin,
1,4 - 1,9 wt% bismuth, and
0,60 - 0,90 wt% selenium.

3. A food handling apparatus according to claim 1, wherein the alloy comprises
14,8 wt% nickel,
3,6 wt% zink,
4,4 wt% tin,
1,52 wt% bismuth, and
0,66 wt% selenium.

4. A food handling apparatus according to any one of claims 1 - 3, wherein a ratio between bismuth and selenium is any of
at least 2,0,
in the range of 2,1 - 2,5, and
2,3.

5. A food handling apparatus according to any one of claims 1 - 4, wherein the alloy has a hardness of at least 125 HB.

6. A food handling apparatus according to any one of claims 1 - 5, wherein the alloy has a tensile strength of at least 290 MPa.

7. A food handling apparatus according to any one of claims 1 - 6, wherein the alloy has been heat treated
at a temperature in the range of 400 - 500 °C,
for a period of at least 2 hours.

8. A food handling apparatus according to any one of claims 1 - 7, wherein the food handling apparatus is a pump (100, 300), the first member (102, 104, 308, 310a, 310b, 310c) being configured to rotate inside the pump (100, 300) such that fluid food product (P, P', IM, IM') is transferred through the pump (100,300).

9. A food handling apparatus according to claim 8, wherein the first member (104) is an impeller, and the second member (106) is a cover that is made of an alloy that comprises
13,0 - 17,5 wt% nickel,
2,5 - 6,0 wt% zink,
3,0 - 6,0 wt% tin,
1,2 - 2,1 wt% bismuth,
0,30 - 0,95 wt% selenium, and
copper that balances the alloy.

10. A food handling apparatus according to claim 8, wherein the first member (308) is a rotor cylinder and the second member (310a, 310b, 310c) is a blade that is made of an alloy that comprises
13,0 - 17,5 wt% nickel,
2,5 - 6,0 wt% zink,
3,0 - 6,0 wt% tin,
1,2 - 2,1 wt% bismuth,
0,30 - 0,95 wt% selenium, and
copper that balances the alloy.

11. A unit for freezing fluid food product (IM, IM'), such as ice cream mix or water ice mix, the unit (200) comprising
a freezer (204) for freezing the fluid food product (IM, IM'),
a pump (202, 206) arranged to transfer the fluid food product (IM, IM') through the freezer (204), wherein the pump (202, 206) is a food handling apparatus according to claim 8 or 9.

12. A unit for mixing food particles (ING) into ice cream mix or water ice mix, the unit comprising a mixer (300) that has
an inlet (306) for food particles,
an inlet (302) for ice cream mix or water ice mix (IM), and
an outlet (304) for ice cream mix or water ice mix (IM') into which food particles (ING) are mixed, wherein the mixer (300) is a food handling apparatus according to claim 8 or 10.

13. A kit of parts for upgrading a food handling apparatus, said kit of parts comprising at least two parts in form of
- an impeller (104) and a cover (106) for a pump (100), or
- a rotor cylinder (308) and a blade (310a, 310b, 310c) for a mixer (300), wherein each of the two parts are made of an alloy that comprises
13,0 - 17,5 wt% nickel,
2,5 - 6,0 wt% zink,
3,0 - 6,0 wt% tin,
1,2 - 2,1 wt% bismuth,
0,30 - 0,95 wt% selenium, and
copper that balances the alloy.

14. A method for freezing ice cream mix (IM, IM'), the method comprising
transferring (402) ice cream mix (IM) by a food handling apparatus (100, 300) according to claim 8 or 9, through a freezer (204), and
freezing (404) the ice cream mix (IM), inside the freezer (204).

15. A method for mixing food particles (ING) into ice cream mix or water ice mix (IM), the method comprising
transferring (502) food particles (ING), and ice cream mix or water ice mix (IM), through a food handling apparatus (100, 300) according to claim 8 or 10.

## Patentansprüche

1. Lebensmittelhandhabungsvorrichtung, umfassend ein erstes Element (102, 104, 106, 307, 308, 310a, 310b, 310c) und ein zweites Element (102, 104, 106, 307, 308, 310a, 310b, 310c), wobei das erste Element angeordnet ist, sich relativ zu dem zweiten Element zu bewegen, wobei das erste Element eine Legierung umfasst, die in Kontakt mit dem zweiten Element steht, wobei die Legierung umfasst:
13,0-17,5 Gew.-% Nickel,
2,5-6,0 Gew.-% Zink,
3,0-6,0 Gew.-% Zinn,
1,2-2,1 Gew.-% Bismut,
0,30-0,95 Gew.-% Selen und
Kupfer als Rest der Legierung.

2. Lebensmittelhandhabungsvorrichtung gemäß Anspruch 1, wobei die Legierung umfasst:
14,0-16,5 Gew.-% Nickel,
3,0-5,0 Gew.-% Zink,
4,0-4,8 Gew.-% Zinn,
1,4-1,9 Gew.-% Bismut und
0,60-0,90 Gew.-% Selen.

3. Lebensmittelhandhabungsvorrichtung gemäß Anspruch 1, wobei die Legierung umfasst:
14,8 Gew.-% Nickel,
3,6 Gew.-% Zink,
4,4 Gew.-% Zinn,
1,52 Gew.-% Bismut und
0,66 Gew.-% Selen.

4. Lebensmittelhandhabungsvorrichtung gemäß einem der Ansprüche 1-3, wobei das Verhältnis zwischen Bismut und Selen eines von
wenigstens 2,0 beträgt,
in dem Bereich von 2,1-2,5 liegt und
2,3 beträgt.

5. Lebensmittelhandhabungsvorrichtung gemäß einem der Ansprüche 1-4, wobei die Legierung eine Härte von wenigstens 125 HB aufweist.

6. Lebensmittelhandhabungsvorrichtung gemäß einem der Ansprüche 1-5, wobei die Legierung eine Zugfestigkeit von wenigstens 290 MPa aufweist.

7. Lebensmittelhandhabungsvorrichtung gemäß einem der Ansprüche 1-6, wobei die Legierung
bei einer Temperatur in dem Bereich von 400-500 °C
für einen Zeitraum von wenigstens 2 Stunden wärmebehandelt worden ist.

8. Lebensmittelhandhabungsvorrichtung gemäß einem der Ansprüche 1-7, wobei die Lebensmittelhandhabungsvorrichtung eine Pumpe (100, 300) ist, wobei das erste Element (102, 104, 308, 310a, 310b, 310c) dafür gestaltet ist, sich innerhalb der Pumpe (100, 300) zu drehen, so dass ein fluides Lebensmittelprodukt (P, P', IM, IM') durch die Pumpe (100, 300) befördert wird.

9. Lebensmittelhandhabungsvorrichtung gemäß Anspruch 8, wobei das erste Element (104) ein Flügelrad ist und das zweite Element (106) eine Abdeckung ist, die aus einer Legierung besteht, die umfasst:
13,0-17,5 Gew.-% Nickel,
2,5-6,0 Gew.-% Zink,
3,0-6,0 Gew.-% Zinn,
1,2-2,1 Gew.-% Bismut,
0,30-0,95 Gew.-% Selen und
Kupfer als Rest der Legierung.

10. Lebensmittelhandhabungsvorrichtung gemäß Anspruch 8, wobei das erste Element (308) ein Rotorzylinder ist und das zweite Element (310a, 310b, 310c) eine Schaufel ist, die aus einer Legierung besteht, die umfasst:
13,0-17,5 Gew.-% Nickel,
2,5-6,0 Gew.-% Zink,
3,0-6,0 Gew.-% Zinn,
1,2-2,1 Gew.-% Bismut,
0,30-0,95 Gew.-% Selen und
Kupfer als Rest der Legierung.

11. Einheit zum Einfrieren eines fluiden Lebensmittelprodukts (IM, IM'), wie z. B. einer Eiscrememischung oder Wassereismischung, wobei die Einheit (200) umfasst:
eine Gefriervorrichtung (204) zum Einfrieren des fluiden Lebensmittelprodukts (IM, IM'),
die Pumpe (202, 206), die dafür angeordnet ist, das fluide Lebensmittelprodukt (IM, IM') durch die Gefriervorrichtung (204) zu befördern, wobei die Pumpe (202, 206) eine Lebensmittelhandhabungsvorrichtung gemäß Anspruch 8 oder 9 ist.

12. Einheit zum Mischen von Lebensmittelpartikeln (ING) in eine Eiscrememischung oder Wassereismischung, wobei die Einheit einen Mischer (300) umfasst, der aufweist:
einen Einlass (306) für Lebensmittelpartikel,
einen Einlass (302) für Eiscrememischung oder Wassereismischung (IM) und
einen Auslass (304) für Eiscrememischung oder Wassereismischung (IM'), in die Lebensmittelpartikel (ING) gemischt sind, wobei der Mischer (300) eine Lebensmittelhandhabungsvorrichtung gemäß Anspruch 8 oder 10 ist.

13. Kit zum Modernisieren einer Lebensmittelhandhabungsvorrichtung, wobei das Kit wenigstens zwei Teile in der Form
- eines Flügelrads (104) und einer Abdeckung (106) für eine Pumpe (100) oder
- eines Rotorzylinders (308) und einer Schaufel (310a, 310b, 310c) für einen Mischer (300)
umfasst, wobei jeder der beiden Teile aus einer Legierung besteht, die umfasst:
13,0-17,5 Gew.-% Nickel,
2,5-6,0 Gew.-% Zink,
3,0-6,0 Gew.-% Zinn,
1,2-2,1 Gew.-% Bismut,
0,30-0,95 Gew.-% Selen und
Kupfer als Rest der Legierung.

14. Verfahren zum Einfrieren von Eiscrememischung (IM, IM'), wobei das Verfahren umfasst:
Befördern (402) von Eiscrememischung (IM) durch eine Lebensmittelhandhabungsvorrichtung (100, 300) gemäß Anspruch 8 oder 9 durch eine Gefriervorrichtung (204) und
Einfrieren (404) der Eiscrememischung (IM) in der Gefriervorrichtung (204).

15. Verfahren zum Mischen von Lebensmittelpartikeln (ING) in eine Eiscrememischung oder Wassereismischung (IM), wobei das Verfahren umfasst:
Befördern (502) von Lebensmittelpartikeln (ING) und Eiscrememischung oder Wassereismischung (IM) durch eine Lebensmittelhandhabungsvorrichtung (100, 300) gemäß Anspruch 8 oder 10.

## Revendications

1. Appareil de manipulation d'aliments comprenant un premier élément (102, 104, 106, 307, 308, 310a, 310b, 310c) et un second élément (102, 104, 106, 307, 308, 310a, 310b, 310c), le premier élément étant agencé pour se déplacer par rapport au second élément, le premier élément comprenant un alliage qui est en contact avec le second élément, l'alliage comprenant
13,0 - 17,5 % en poids de nickel,
2,5 - 6,0 % en poids de zinc,
3,0 - 6,0 % en poids d'étain,
1,2 - 2,1 % en poids de bismuth,
0,30 - 0,95 % en poids de sélénium, et
du cuivre qui complète l'alliage.

2. Appareil de manipulation d'aliments selon la revendication 1, l'alliage comprenant
14,0 - 16,5 % en poids de nickel,
3,0 - 5,0 % en poids de zinc,
4,0 - 4,8 % en poids d'étain,
1,4 - 1,9 % en poids de bismuth, et
0,60 - 0,90 % en poids de sélénium.

3. Appareil de manipulation d'aliments selon la revendication 1, l'alliage comprenant
14,8 % en poids de nickel,
3,6 % en poids de zinc,
4,4 % en poids d'étain,
1,52 % en poids de bismuth, et
0,66 % en poids de sélénium.

4. Appareil de manipulation d'aliments selon l'une quelconque des revendications 1 à 3, un rapport entre le bismuth et le sélénium ayant une valeur quelconque parmi une valeur
égale à au moins 2,0,
dans la plage de 2,1 à 2,5 et
égale à 2,3.

5. Appareil de manipulation d'aliments selon l'une quelconque des revendications 1 à 4, l'alliage ayant une dureté d'au moins 125 HB.

6. Appareil de manipulation d'aliments selon l'une quelconque des revendications 1 à 5, l'alliage ayant une résistance à la traction d'au moins 290 MPa.

7. Appareil de manipulation d'aliments selon l'une quelconque des revendications 1 à 6, l'alliage ayant été traité thermiquement
à une température comprise entre 400 et 500 °C,
pendant une période d'au moins 2 heures.

8. Appareil de manipulation d'aliments selon l'une quelconque des revendications 1 à 7, l'appareil de manipulation d'aliments étant une pompe (100, 300), le premier élément (102, 104, 308, 310a, 310b, 310c) étant configuré pour tourner à l'intérieur de la pompe (100, 300) de telle sorte que le produit alimentaire fluide (P, P', IM, IM') est transféré à travers la pompe (100, 300) .

9. Appareil de manipulation d'aliments selon la revendication 8, le premier élément (104) étant une turbine, et le second élément (106) étant un couvercle qui est constitué d'un alliage qui comprend
13,0 - 17,5 % en poids de nickel,
2,5 - 6,0 % en poids de zinc,
3,0 - 6,0 % en poids d'étain,
1,2 - 2,1 % en poids de bismuth,
0,30 - 0,95 % en poids de sélénium, et
du cuivre qui complète l'alliage.

10. Appareil de manipulation d'aliments selon la revendication 8, le premier élément (308) étant un cylindre de rotor et le second élément (310a, 310b, 310c) étant une pale qui est constituée d'un alliage qui comprend
13,0 - 17,5 % en poids de nickel,
2,5 - 6,0 % en poids de zinc,
3,0 - 6,0 % en poids d'étain,
1,2 - 2,1 % en poids de bismuth,
0,30 - 0,95 % en poids de sélénium, et
du cuivre qui complète l'alliage.

11. Unité pour congeler un produit alimentaire fluide (IM, IM'), tel qu'un mélange de crème glacée ou un mélange de glace à l'eau, l'unité (200) comprenant
un congélateur (204) pour congeler le produit alimentaire fluide (IM, IM'),
une pompe (202, 206) agencée pour transférer le produit alimentaire fluide (IM, IM') à travers le congélateur (204), la pompe (202, 206) étant un appareil de manipulation d'aliments selon la revendication 8 ou 9.

12. Unité pour mélanger des particules alimentaires (ING) dans un mélange de crème glacée ou un mélange de glace à l'eau, l'unité comprenant un mélangeur (300) qui a
une entrée (306) pour des particules alimentaires,
une entrée (302) pour un mélange de crème glacée ou un mélange de glace à l'eau (IM), et
une sortie (304) pour un mélange de crème glacée ou un mélange de glace à l'eau (IM') dans laquelle des particules alimentaires (ING) sont mélangées, le mélangeur (300) étant un appareil de manipulation d'aliments selon la revendication 8 ou 10.

13. Kit de pièces pour l'amélioration d'un appareil de manipulation d'aliments, ledit kit de pièces comprenant au moins deux pièces en forme de
- une turbine (104) et un couvercle (106) pour une pompe (100), ou
- un cylindre de rotor (308) et une pale (310a, 310b, 310c) pour un mélangeur (300), chacune des deux pièces étant constituée d'un alliage qui comprend
13,0 - 17,5 % en poids de nickel,
2,5 - 6,0 % en poids de zinc,
3,0 - 6,0 % en poids d'étain,
1,2 - 2,1 % en poids de bismuth,
0,30 - 0,95 % en poids de sélénium, et
du cuivre qui complète l'alliage.

14. Procédé de congélation d'un mélange de crème glacée (IM, IM'), le procédé comprenant :
le transfert (402) d'un mélange de crème glacée (IM) par un appareil de manipulation d'aliments (100, 300) selon la revendication 8 ou 9, à travers un congélateur (204), et
la congélation (404) du mélange de crème glacée (IM), à l'intérieur du congélateur (204).

15. Procédé pour mélanger des particules alimentaires (ING) dans un mélange de crème glacée ou un mélange de glace à l'eau (IM), le procédé comprenant :
le transfert (502) de particules alimentaires (ING) et du mélange de crème glacée ou du mélange de glace à l'eau (IM) à travers un appareil de manipulation d'aliments (100, 300) selon la revendication 8 ou 10.
